# EUROPÄISCHE PATENTSCHRIFT

(11) **EP 3 025 938 B1**
(45) Veröffentlichungstag und Bekanntmachung des Hinweises auf die Patenterteilung: **13.12.2017**
(21) Anmeldenummer: 15190932.2
(22) Anmeldetag: 22.10.2015
(51) Int. Cl.: B62D 25/24, A47B 95/00, A47B 97/00, F16B 12/26, A47B 88/00

(54) **ABDECKVORRICHTUNG FÜR EINE FLÄCHENSEITE EINES WANDELEMENTS**
COVERING DEVICE FOR A FLAT SIDE OF A WALL ELEMENT
DISPOSITIF DE RECOUVREMENT POUR UNE FACE D'UN ELEMENT DE PAROI

(30) Priorität: 27.11.2014 DE 202014105722 U
(43) Veröffentlichungstag der Anmeldung: 01.06.2016
(73) Patentinhaber: Grass GmbH, 6973 Höchst (AT)
(72) Erfinder: Lindinger, Gerlinde, 5071 Wals (AT)
(74) Vertreter: Otten, Roth, Dobler & Partner mbB Patentanwälte

(56) Entgegenhaltungen:
- WO-A2-2010/051901
- DE-A1- 3 713 282
- DE-U1-202005 001 285
- FR-A1- 2 982 595
- US-A- 4 761 319

## Beschreibung

Die Erfindung betrifft ein Möbel mit einer Abdeckvorrichtung für eine Flächenseite eines Wandelements. Auf dem Gebiet des Möbelbaus werden zur Herstellung von Schubkästen, Schubladen und ähnlichen beweglich gelagerten Möbelteilen häufig Profilelemente, insbesondere Hohlprofilteile als Wandelemente eingesetzt. Derartige Hohlprofile bieten den Vorteil, dass sich in einem Hohlraum Montageelemente und Einstellvorrichtungen blickgeschützt unterbringen lassen. Eine Stirnseite, die durch Zuschnitt des Profilelements auf eine gewünschte Länge entsteht, weist dadurch eine Profilöffnung insbesondere entsprechend dem Querschnitt des Hohlraumes auf, in dem sich stirnseitig ein Montageelement unterbringen lässt, um die entsprechende Stirnseite mit einem weiteren Wandelement vorzugsweise rechtwinklig zu verbinden. Dabei ist insbesondere für einstellbare Montageelemente bekannt, an einem entsprechenden Wandelement in einer Flächenseite eine vergleichsweise kleine Öffnung auszubilden, durch die ein Einstellelement wie beispielsweise ein Exzenter oder eine Schraube zumindest mit einem Werkzeug - z.B. einem Schraubendreher - von außen zugänglich ist.

Um jedoch während des Gebrauchs zu vermeiden, dass in einen Hohlraum eines Wandelements durch eine derartige Öffnung Verschmutzungen eindringen können, sind Abdeckvorrichtungen in verschiedensten Ausführungen zum Verschließen einer entsprechenden Öffnung bekannt. Weil die Abdeckvorrichtung optisch möglichst wenig auffallen und bei einer Reinigung vergleichsweise sicher angebracht sein soll, ist es üblich, die Abdeckvorrichtung vergleichsweise eng auf das Wandelement und dessen Öffnung hin abzustimmen.

Der vorliegenden Erfindung liegt die Aufgabe zugrunde, ein Mödel mit einer Abdeckvorrichtung bereitzustellen, die vielseitig einsetzbar ist.

Die Aufgabe wird durch ein Möbel mit den Merkmalen des Anspruchs 1 gelöst. Bevorzugte und vorteilhafte Ausführungen der Erfindung sind in den abhängigen Ansprüchen aufgeführt.

Die Erfindung geht von einem Möbel mit einer Abdeckvorrichtung für eine Flächenseite eines Wandelements des Möbels, insbesondere ein Seitenzarge einer Schublade, mit der eine Öffnung in der Flächenseite des Wandelements abgedeckt ist, aus. Dabei weist die Abdeckvorrichtung Anbringmittel auf, mit denen die Abdeckvorrichtung an der Öffnung anbringbar ist. Ein gattungsgemässes Möbel ist in DE202005001285U offenbart. Der Kern der Erfindung besteht darin, dass die Anbringmittel mehrere, voneinander verschiedene Rastelemente umfassen, wobei zwei voneinander verschiedene der Rastelemente an unterschiedliche Wandstärken angepasst sind. Die Abdeckvorrichtung lässt sich dadurch vorteilhaft an mehreren verschiedenen Wandelementen anbringen, die unterschiedliche Materialstärken an Flächenseiten mit einer Öffnung zum Montieren und Einstellen von Verbindungskomponenten aufweisen. Des Weiteren kann ein Wandelement gegebenenfalls unterschiedliche Materialstärken an z.B. entgegengesetzten Seiten aufweisen, wobei zumindest eines der unterschiedlichen Rastelemente eine Flächenseite am Rand der Öffnung eingerastet hintergreifen kann. Dementsprechend entfällt zusätzlicher Herstellungsaufwand und damit verbundene Kosten, weil die erfindungsgemäße Abdeckvorrichtung mehrere verschiedene Varianten einer Abdeckung durch eine Ausführungsform ersetzen kann.

Die Öffnung ist vorzugsweise in der Flächenseite des Wandelements, die für eine sichtbare Anordnung am Möbel vorgesehen ist, und nicht an der Stirnseite, an der das Wandelement mit einem anderen Schubladenteil verbunden ist, ausgebildet. Die Öffnung kann zum Beispiel für einen Ein- bzw. Zugriff zu einem Montageelement, das innerhalb des Wandelements angeordnet ist, vorgesehen sein. Dabei kann das Montageelement zum Beispiel für eine Befestigung oder für eine Justierung eines zweiten Wandelements, z.B. einer Frontblende und z.B. einer Rückwand bestimmt sein.

Vorzugsweise weist das Abdeckelement einen plattenartigen Grundkörper auf. Dadurch lässt sich eine Öffnung mit vergleichsweise geringer Bauhöhe, insbesondere über eine gesamte Öffnungsfläche, vollständig abschließen.

Eine bevorzugte Ausführung der Erfindung besteht darin, dass eines der Rastelemente parallel zu einer ersten Abdeckoberfläche des Grundkörpers, die für eine dem Wandelement zugewandte Anordnung vorgesehen ist, elastisch nachgiebig mit dem Grundkörper verbunden ist. Hierdurch kann z.B. der Grundkörper die Flächenseite bündig anschließend abdecken. Haltende Kräfte sind dabei senkrecht gegen den Rand der Öffnung geführt, um die Abdeckvorrichtung zuverlässig zu fixieren.

Des Weiteren ist es bevorzugt, dass jedes der Rastelemente einen blockförmigen Vorsprung mit einer bezüglich des nächsten Randabschnitts nach außen weisenden Anlagefläche und mit einer der ersten Abdeckoberfläche gegenüberstehenden und in einem Winkel an die Anlagefläche angrenzenden Versatzfläche aufweist. Der blockförmige Vorsprung kann vorteilhaft als Rastriegel am Rand der Öffnung die Flächenseite des Wandelements formschlüssig hintergreifen und mit der Wirkung eines Stempels die Anlagefläche gegen einen Rand der Öffnung drücken, um reibkraftschlüssig die Abdeckvorrichtung an der Öffnung festzuhalten. Dadurch sind zwei verschiedene Haltefunktionen platzsparend am Rastelement ausgebildet.

Vorzugsweise ist die Anlagefläche eines der Rastelemente rechtwinklig zu einem Flächenabschnitt der Abdeckoberfläche angeordnet, der für ein flächiges Anliegen an der Flächenseite des Wandelements vorgesehen ist. Dadurch lässt sich ein Zwischenraum zwischen dem abdeckenden Grundkörper und der Flächenseite durch ein Rückfedern der Abdeckvorrichtung vermeiden.

Außerdem ist es bevorzugt, dass eine Versatzkante, an der die Anlagefläche an die Versatzfläche angrenzt, eines ersten der Rastelemente einen Abstand von der ersten Abdeckoberfläche aufweist, der von einem entsprechenden Abstand einer Versatzkante eines zweiten der Rastelemente verschieden ist. Der Abstand zwischen einer der Versatzflächen und der ersten Abdeckoberfläche definiert dabei eine maximale Materialstärke, die das entsprechende Rastelement hintergreifen kann. Die erste Abdeckoberfläche, die eine der beiden großen Hauptflächen des plattenförmigen Grundkörpers ist, ist daher die innere Abdeckoberfläche, die insbesondere an der Außenfläche des Wandelements anliegen kann. Die zweite Abdeckoberfläche ist entsprechend die sichtbare, nach außen gewandte Hauptfläche im montierten Zustand an der Flächenseite des Wandelements.

Der blockförmige Vorsprung bildet quasi einen Riegel, der für ein Hintergreifen eines Wandabschnitts des Wandelements am Rand der Öffnung vorgesehen ist, wenn die Materialstärke bzw. Materialdicke am Wandabschnitt dies zulässt. Dabei ist die Versatzkante hinter den Wandabschnitt verschiebbar. Der Wandabschnitt ist vorzugsweise zwischen mindestens eine der beiden Versatzflächen und die Abdeckoberfläche anordenbar. Bei einer vergleichsweise dünnen Wand können beide Rastelemente einen Wandabschnitt hintergreifen, wobei gegebenenfalls nur eine der Versatzflächen an einer Rückseite eines Wandabschnitts anliegt. Bei einer etwas größeren Wandstärke liegt die Anlagefläche des Rastelements, das den kleineren Abstand der Versatzkante aufweist, am Rand der Öffnung an, während der Vorsprung des Rastelement mit dem größeren Abstand den Wandabschnitt am Rand der Öffnung noch hintergreifen kann. Wenn die Materialstärke des Wandelements beide Abstände übertrifft, kann keines der Rastelemente mehr den Wandabschnitt am Öffnungsrand hintergreifen und beide Rastelemente liegen mit der Anlagefläche des jeweiligen Vorsprungs am Öffnungsrand an.

Vorzugsweise sind mindestens zwei der Rastelemente mit unterschiedlich beabstandeten Versatzflächen an einen gemeinsamen Umrissabschnitt der ersten Abdeckoberfläche angeordnet, wodurch eine hintergreifende Befestigung durch wenigstens eines der Rastelemente gewährleistet sein kann.

Dabei können die Anlageflächen von mindestens zwei der Rastelemente mit unterschiedlich beabstandeten Versatzflächen übereinstimmend in gleiche Richtung ausgerichtet sein. Vorzugsweise liegen die Anlagenflächen der mindestens zwei Rastelemente mit unterschiedlich beabstandeten Versatzflächen in einer gemeinsamen, senkrecht zur Abdeckoberfläche stehenden Ebene. Die senkrecht stehende Ebene kann als Tangentialebene betrachtet werden.

Vorzugsweise weist die erste Abdeckoberfläche einen rechteckigen Umriss auf. Dabei ist es besonders bevorzugt, dass mehrere der Rastelemente an einem gemeinsamen geraden Umrissabschnitt der Abdeckoberfläche angeordnet sind, wobei sich mindestens zwei der Rastelemente darin unterscheiden, dass deren Versatzkanten und unterschiedlichen Abständen von der Abdeckoberfläche am gleichen Umrissabschnitt angeordnet sind. Gegebenenfalls kann dabei zumindest eines der Rastelemente an dem geraden Umrissabschnitt das Wandelement am Rand einer Öffnung am Umrissabschnitt hintergreifen.

Eine bevorzugte Ausführung der Erfindung liegt darin, dass der Vorsprung eines der Rastelemente an einem freistehenden Schwingabschnitt eines elastisch biegsamen Balkens angebracht ist, wobei letzterer an zwei entgegengesetzten Enden durch je eine von der Abdeckoberfläche aufragende Stützsäule mit dem Grundkörper fest verbunden ist. Dadurch kann eine vorteilhafte Orientierung des Rastelements, insbesondere des Vorsprungs vergleichsweise stabil vorgegeben sein. Der Balken kann gerade von einer Stütze zur anderen frei gespannt sein. Um eine relativhohe Andruckkraft bei vergleichsweise großem Rastweg des Vorsprungs zu erreichen, kann der Balken eine gebogene Form aufweisen.

Nachfolgend wird die Erfindung an einem Ausführungsbeispiel näher erläutert und anhand der Zeichnungen beschrieben. Das Ausführungsbeispiel ist in den Figuren schematisch und nicht maßstäblich dargestellt. Es zeigen:
- Figur 1: eine Aufsicht auf eine erste Abdeckoberfläche einer Abdeckvorrichtung des erfindungsgemässen Möbels

- Figur 2: ein Ausschnitt einer perspektivischen Ansicht der Abdeckvorrichtung.

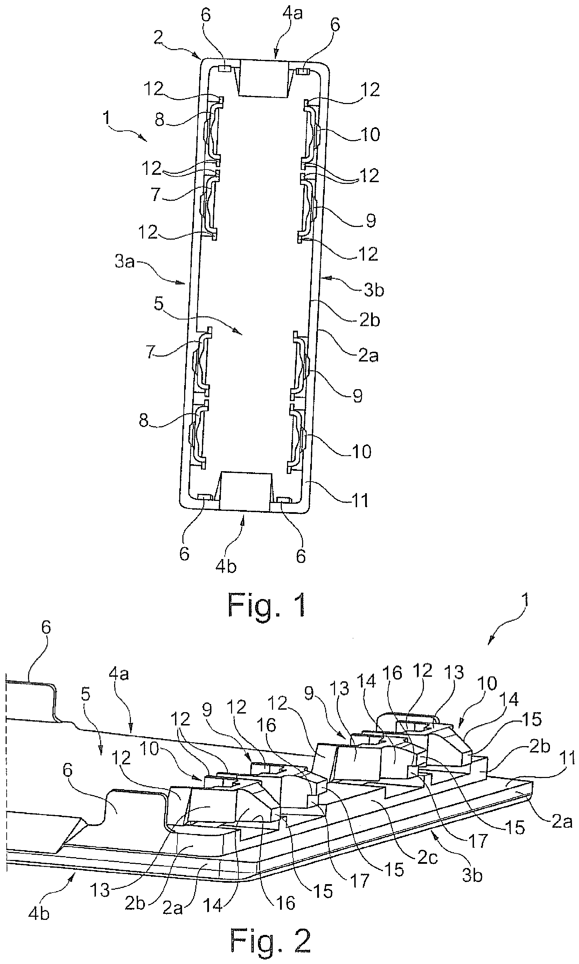

In Fig. 1 ist ein Ausführungsbeispiel eines erfindungsgemässen Möbels mit einer Abdeckvorrichtung 1 mit einem plattenförmigen Grundkörper 2 gezeigt. Der plattenförmige Grundkörper 2 weist einen rechteckigen Grundriss mit zwei langen Seiten 3a und 3b sowie mit zwei kurzen Seiten 4a und 4b auf. Dabei ist in Fig. 1 die erste Abdeckoberfläche 5 des Grundkörpers gezeigt, die bei einer Anbringung an einer Öffnung (nicht gezeigt) an einer Flächenseite eines Wandelements (nicht gezeigt) dem Wandelement und dessen Öffnung zugewandt ist. An der ersten, inneren Abdeckoberfläche 5 des Grundkörpers sind mehrere Anbringmittel ausgebildet. Beispielsweise stehen aus der Abdeckoberfläche Laschen 6 senkrecht hervor, die zum elastisch gespannten Anliegen an z.B. einer Berandung einer Öffnung (nicht gezeigt) vorgesehen sind. Die Laschen 6 können außerdem dem Führen einer Bewegung z.B. beim Einsetzen der Abdeckvorrichtung dienen. Die Anbringmittel umfassen außerdem mehrere Rastelemente 7, 8 9 und 10, die an den langen Seiten 3a und 3b angeordnet sind.

Der plattenförmige Grundkörper 2 weist zwei, z.B. gleich dicke Schichten 2a und 2b auf. Die innere Schicht 2b weist einen kleineren Umriss auf, der vorzugsweise konzentrisch zum größeren Umriss der äußeren Schicht 2a angeordnet ist. Die erste, d.h. innere Abdeckoberfläche 5 weist dadurch einen stufenförmig versetzten Rand 11 auf, der z.B. mit einer konstanten Breite die innere Schicht 2b umgibt.

Der Umriss der inneren Schicht 2b ist vorzugsweise an einen Umriss einer Öffnung (nicht gezeigt) in einer Flächenseite eines Wandelements (nicht gezeigt) derart angepasst, dass die innere Schicht 2b in die Öffnung einsetzbar ist. Dabei ist ein Bewegungsspiel der inneren Schicht 2b innerhalb der Öffnung - zumindest parallel zu den kurzen Randseiten 4a und 4b - vorzugsweise deutlich kleiner als ein Federweg eines der Rastelemente 7 - 10. Ebenso ist das Bewegungsspiel der inneren Schicht 2b vorzugsweise kleiner als eine Breite mit der der Rand 11 über die innere Schicht 2b hinausragt, um zu vermeiden, dass an der Öffnung ein nicht abgedeckter Bereich entstehen kann.

Entlang der Seiten 3a und 3b sind verschiedene Rastelemente 7 - 10 verteilt angeordnet. Dabei sind z.B. mehrere, verschiedene Rastelemente 7 und 8 an der Seite 3a symmetrisch bezüglich einem Mittelpunkt der Seite 3a angeordnet, wobei die Rastelement 8 gegenüber den Rastelementen 7 weiter außen gelegen sind. In ähnlicher Weise sind mehrere, unterschiedliche Rastelemente 9 und 10 an der Seite 3b ausgebildet und angeordnet. Dabei können paarweise die Rastelemente 7 und 9 sowie die Rastelemente 8 und 10 gleich aufgebaut sein.

In Fig. 2 ist die Abdeckvorrichtung 1 ausschnittsweise mit der Seite 3b gezeigt, an der die Rastelemente 9 und 10 bereitgestellt sind. Jedes der Rastelemente 9, 10 weist zwei Stützsäulen 12 auf, die in einem Abstand voneinander von der inneren Schicht 2b des Grundkörpers 2 senkrecht hervorstehen. An den zwei Stützsäulen 12 eines Rastelements 9, 10 ragt nach außen gerichtet ein etwa halbkreisförmig geschwungener Balken 13 hervor, der die beiden Stützsäulen 12 des Rastelements 9 oder 10 miteinander verbindet. In der Mitte des Balkens 13, der vorzugsweise am weitesten nach außen hervorsteht, ist an der Außenseite des Balkens 13 ein blockförmiger Vorsprung 14 ausgebildet. Der blockförmige Vorsprung 14 ragt über eine Randseitenfläche 2c der inneren Schicht 2b hinaus, wodurch eine Anschlagfläche 15 des blockförmigen Vorsprungs 14 oberhalb des Randes 11 frei vorstehend angeordnet ist. Die Anschlagfläche 15 kann mit einer Andruckkraft, die durch eine Verformung des Balkens 13 im eingesetzten Zustand in einer Öffnung (nicht gezeigt) verfügbar ist, an einer Berandung der Öffnung z.B. flächig anliegen.

Unterhalb der Anschlagfläche 15 ist an den Vorsprüngen 14 eine weitere Fläche 16 ausgebildet, die in einem z.B. rechten Winkel abgewinkelt zur Anschlagfläche 15 angeordnet ist. Dabei ist die Fläche 16 vorzugsweise dem Rand 11 mit einem Abstand gegenüberstehend angeordnet, wodurch in einen Zwischenraum zwischen dem Rand 11 und dem Vorsprung 14 ein Abschnitt einer Flächenseite, der eine Öffnung (nicht gezeigt) umgibt, eingeschoben sein kann.

Am Rastelement 10 ist die Fläche 16 eine Seitenfläche des blockförmigen Vorsprungs 14, die in einem Abstand entsprechend einer Höhe der Seitenfläche 2c über dem Rand 11 gelegen ist.

Bei den Rastelementen 9 ist am blockförmigen Vorsprung 14 ein Versatz ausgebildet, durch dessen Versatzfläche 16 die Anschlagfläche 15 von einer zweiten Anschlagfläche 17, die nach innen z.B. zu einer Ebene der Fläche 2c hin gegenüber der Anschlagfläche 15 versetzt ist, abgesetzt ist. Die Versatzfläche 16 an den Rastelementen 9 liegt damit in einem größeren Abstand vom Rand 11 entfernt als die Versatzfläche 16 der Rastelemente 10. Dadurch kann der Vorsprung 14 eines der Rastelemente 9 eine Flächenseite (nicht gezeigt) mit dickerer Materialstärke am Rand einer Öffnung (nicht gezeigt) hintergreifen als der Vorsprung 14 eines Rastelements 10.

### Bezugszeichenliste:

- 1: Abdeckvorrichtung
- 2: Grundkörper
- 2a: Schicht (äußere)
- 2b: Schicht (innere)
- 2c: Fläche
- 3a: Seitenrand
- 3b: Seitenrand
- 4a: Seitenrand
- 4b: Seitenrand
- 5: Abdeckoberfläche
- 6: Lasche
- 7: Rastelement
- 8: Rastelement
- 9: Rastelement
- 10: Rastelement
- 11: Rand
- 12: Stützsäule
- 13: Balken
- 14: Vorsprung
- 15: Anschlagfläche
- 16: Versatzfläche
- 17: Anschlagfläche

## Patentansprüche

1. Möbel mit einer Abdeckvorrichtung (1) für eine Flächenseite eines Wandelements des Möbels, insbesondere eine Seitenzarge einer Schublade, wobei mit der Abdeckvorrichtung eine Öffnung in der Flächenseite des Wandelements abgedeckt ist, wobei die Abdeckvorrichtung (1) Anbringmittel aufweist, mit denen die Abdeckvorrichtung (1) an der Öffnung anbringbar ist, **dadurch gekennzeichnet, dass** die Anbringmittel mehrere, voneinander verschiedene Rastelemente (7, 8, 9, 10) umfassen, wobei die verschiedenen Rastelemente (7, 8, 9, 10) für ein Verrasten an unterschiedlichen Wandstärken angepasst sind.

2. Möbel mit einer Abdeckvorrichtung (1) nach Anspruch 1, **dadurch gekennzeichnet, dass** die Abdeckvorrichtung (1) einen plattenartigen Grundkörper (2) aufweist.

3. Möbel mit einer Abdeckvorrichtung (1) nach einem der vorgenannten Ansprüche, **dadurch gekennzeichnet, dass** eines der Rastelemente (7, 8, 9, 10) parallel zu einer ersten Abdeckoberfläche (5) des Grundkörpers (2), die für eine dem Wandelement zugewandte Anordnung vorgesehen ist, elastisch nachgiebig mit dem Grundkörper (2) verbunden ist.

4. Möbel mit einer Abdeckvorrichtung (1) nach dem vorgenannten Anspruch 3, **dadurch gekennzeichnet, dass** jedes der Rastelemente (7, 8, 9, 10) einen blockförmigen Vorsprung (14) mit einer bezüglich des nächsten Randabschnitts (3a, 3b) nach außen weisenden Anlagefläche (15) und mit einer der ersten Abdeckoberfläche (5) gegenüberstehende und in einem Winkel an die erste Anlagefläche (15) angrenzende Versatzfläche (16) aufweist.

5. Möbel mit einer Abdeckvorrichtung (1) nach dem vorgenannten Anspruch 3, **dadurch gekennzeichnet, dass** die Anlagefläche (15, 17) eines der Rastelemente (7, 8, 9, 10) rechtwinklig zu einem Flächenabschnitt (11) der Abdeckoberfläche (5) angeordnet ist, der für ein flächiges Anliegen an der Flächenseite des Wandelements vorgesehen ist.

6. Möbel mit einer Abdeckvorrichtung (1) nach dem vorgenannten Anspruch 3, **dadurch gekennzeichnet, dass** eine Versatzkante, an der die erste Anlagefläche (15) an die Versatzfläche (16) angrenzt, eines ersten der Rastelemente (7, 8, 9, 10) einen Abstand von der ersten Abdeckoberfläche (5) aufweist, der von einem entsprechenden Abstand einer Versatzkante eines zweiten der Rastelemente (7, 8, 9, 10) verschieden ist.

7. Möbel mit einer Abdeckvorrichtung (1) nach dem vorgenannten Anspruch 4, **dadurch gekennzeichnet, dass** mindestens zwei der Rastelemente (7, 8, 9, 10) mit unterschiedlich beabstandeten Versatzflächen (16) an einer gemeinsamen Umrissabschnittsfläche (2c) der ersten Abdeckoberfläche (5) angeordnet sind.

8. Möbel mit einer Abdeckvorrichtung (1) nach dem vorgenannten Anspruch 4, **dadurch gekennzeichnet, dass** die ersten Anlageflächen (15) von mindestens zwei der Rastelemente (7, 8, 9, 10) mit unterschiedlich beabstandeten Versatzflächen (16) übereinstimmend in die gleiche Richtung ausgerichtet sind.

9. Möbel mit einer Abdeckvorrichtung (1) nach dem vorgenannten Anspruch 4, **dadurch gekennzeichnet, dass** die ersten Anlageflächen (15) der mindestens zwei Rastelemente (7, 8, 9, 10) mit unterschiedlich beabstandeten Versatzflächen (16) in einer gemeinsamen, senkrecht zur Abdeckoberfläche (5) stehenden Ebene liegen.

10. Möbel mit einer Abdeckvorrichtung (1) nach dem vorgenannten Anspruch 3, **dadurch gekennzeichnet, dass** die erste Abdeckoberfläche (5) einen rechteckigen Umriss aufweist.

11. Möbel mit einer Abdeckvorrichtung (1) nach Anspruch 6, **dadurch gekennzeichnet, dass** mehrere der Rastelemente (7, 8, 9, 10) an einem gemeinsamen geraden Umrissabschnitt (3a, 3b) der Abdeckoberfläche (5) angeordnet sind, wobei sich mindestens zwei der Rastelemente (7, 8, 9, 10) darin unterscheiden, dass deren Versatzkanten in unterschiedlichen Abständen von der Abdeckoberfläche (5) am gleichen Umrissabschnitt (3a, 3b) angeordnet sind.

12. Möbel mit einer Abdeckvorrichtung (1) nach dem vorgenannten Anspruch 3, **dadurch gekennzeichnet, dass** der Vorsprung (14) eines der Rastelemente (7, 8, 9, 10) an einem freistehenden Schwingabschnitt eines elastisch biegsamen Balkens (13) angebracht ist, wobei letzterer an zwei entgegengesetzten Enden durch je eine von der Abdeckoberfläche (5) aufragende Stützsäule (12) mit dem Grundkörper (2) fest verbunden ist.

13. Möbel mit einer Abdeckvorrichtung (1) nach dem vorgenannten Anspruch 12, **dadurch gekennzeichnet, dass** der Balken (13) eine gebogene Form aufweist.

## Claims

1. Piece of furniture with a covering device (1) for a surface side of a wall element of the piece of furniture, in particular a side rail of a drawer, wherein an opening in the surface side of the wall element is covered by the covering device, wherein the covering device (1) has attachment means by means of which the covering device (1) can be attached to the opening, **characterised in that** the attachment means comprises several detent elements (7, 8, 9, 10) which are different from one another, wherein the different detent elements (7, 8, 9, 10) are adapted to lock onto on different wall thicknesses.

2. Piece of furniture with a covering device (1) according to claim 1, **characterised in that** the covering device (1) has a plate-like basic body (2).

3. Piece of furniture with a covering device (1) according to any of the preceding claims, **characterised in that** one of the detent elements (7, 8, 9, 10) parallel to a first covering surface (5) of the basic body (2), which is provided for arrangement facing the wall element, is connected elastically resiliently to the basic body (2).

4. Piece of furniture with a covering device (1) according to the preceding claim 3, **characterised in that** each of the detent elements (7, 8, 9, 10) has a block-like projection (14) with a contact bearing face (15) facing outwards relative to the next edge section (3a, 3b), and with an off-set face (16) opposite the first covering surface (5) and adjoining the first contact bearing face (15) at an angle.

5. Piece of furniture with a covering device (1) according to the preceding claim 3, **characterised in that** the contact bearing face (15, 17) of one of the detent elements (7, 8, 9, 10) is arranged at right angles to a surface section (11) of the covering surface (5) which is provided for bearing flat against the surface side of the wall element.

6. Piece of furniture with a covering device (1) according to the preceding claim 3, **characterised in that** an offset edge, at which the first contact bearing face (15) adjoins the offset face (16), of a first of the detent elements (7, 8, 9, 10) has a distance from the first covering surface (5) which is different from a corresponding distance of an offset edge of a second of the detent elements (7, 8, 9, 10).

7. Piece of furniture with a covering device (1) according to the preceding claim 4, **characterised in that** at least two of the detent elements (7, 8, 9, 10) with differently spaced offset faces (16) are arranged on a common outline section surface (2c) of the first covering surface (5).

8. Piece of furniture with a covering device (1) according to the preceding claim 4, **characterised in that** the first contact bearing faces (15) of at least two of the detent elements (7, 8, 9,10) with differently spaced offset faces (16) are aligned congruently in the same direction.

9. Piece of furniture with a covering device (1) according to the preceding claim 4, **characterised in that** the first contact bearing faces (15) of the at least two detent elements (7, 8, 9, 10) with differently spaced offset faces (16) lie in a common plane perpendicular to the covering surface (5).

10. Piece of furniture with a covering device (1) according to the preceding claim 3, **characterised in that** the first covering surface (5) has a rectangular outline.

11. Piece of furniture with a covering device (1) according to claim 6, **characterised in that** several of the detent elements (7, 8, 9, 10) are arranged on a common straight outline section (3a, 3b) of the covering surface (5), wherein at least two of the detent elements (7, 8, 9, 10) differ **in that** their offset edges are arranged on the same outline section (3a, 3b) at different distances from the covering surface (5).

12. Piece of furniture with a covering device (1) according to the preceding 3, **characterised in that** the projection (14) of one of the detent elements (7, 8, 9, 10) is attached to a free-standing swing section of an elastically deformable bar (13), wherein the latter is securely connected at both opposite ends to the basic body (2) by a support column (12) projecting up from the covering surface (5).

13. Piece of furniture with a covering device (1) according to the preceding claim 12, **characterised in that** the bar (13) has a curved shape.

## Revendications

1. Meuble avec un dispositif de recouvrement (1) pour un côté de surface d'un élément de paroi du meuble, en particulier un châssis latéral d'un tiroir, une ouverture dans le côté de surface de l'élément de paroi étant recouverte par ledit dispositif de recouvrement, le dispositif de recouvrement (1) étant muni de moyens de fixation à l'aide desquels le dispositif de recouvrement (1) peut être fixé à l'ouverture, **caractérisé en ce que** les moyens de fixation sont munis de plusieurs éléments d'encliquetage (7, 8, 9, 10) différents les uns des autres, les différents éléments d'encliquetage (7, 8, 9, 10) étant adaptés pour s'encliqueter sur différentes épaisseurs de paroi.

2. Meuble avec un dispositif de recouvrement (1) selon la revendication 1, **caractérisé en ce que** le dispositif de recouvrement (1) est muni d'un corps de base (2) en forme de plaque.

3. Meuble avec un dispositif de recouvrement (1) selon l'une des revendications précédentes, **caractérisé en ce que** l'un des éléments d'encliquetage (7, 8, 9, 10) est relié de façon élastiquement déformable au corps de base (2) parallèlement à une première surface de recouvrement (5) du corps de base (2) qui est prévue pour une disposition faisant face à l'élément de paroi.

4. Meuble avec un dispositif de recouvrement (1) selon la revendication précitée 3, **caractérisé en ce que** chacun des éléments d'encliquetage (7, 8, 9, 10) est muni d'une saillie en forme de bloc (14) avec une face d'appui (15) dirigée vers l'extérieur par rapport à la section de bord suivante (3a, 3b) et avec une face décalée (16) faisant face à la première surface de recouvrement (5) et adjacente en faisant un angle à la première face d'appui (15).

5. Meuble avec un dispositif de recouvrement (1) selon la revendication précitée 3, **caractérisé en ce que** la face d'appui (15, 17) de l'un des éléments d'encliquetage (7, 8, 9, 10) est disposée perpendiculairement à une section de surface (11) de la surface de recouvrement (5), laquelle section de surface est prévue pour un appui plan sur le côté de surface de l'élément de paroi.

6. Meuble avec un dispositif de recouvrement (1) selon la revendication précitée 3, **caractérisé en ce qu'**une arête décalée d'un premier des éléments d'encliquetage (7, 8, 9, 10), à laquelle la première face d'appui (15) est contiguë à la face décalée (16), se trouve à une distance de la première surface de recouvrement (5) qui est différente d'une distance correspondante d'une arête décalée d'un deuxième des éléments d'encliquetage (7, 8, 9, 10).

7. Meuble avec un dispositif de recouvrement (1) selon la revendication précitée 4, **caractérisé en ce qu'**au moins deux des éléments d'encliquetage (7, 8, 9, 10) sont disposés sur une surface de section de contour (2c) commune de la première surface de recouvrement (5) avec des faces décalées (16) situées à des distances différentes.

8. Meuble avec un dispositif de recouvrement (1) selon la revendication précitée 4, **caractérisé en ce que** les premières faces d'appui (15) d'au moins deux des éléments d'encliquetage (7, 8, 9, 10) sont orientées de façon concordante dans la même direction avec des faces décalées (16) situées à des distances différentes.

9. Meuble avec un dispositif de recouvrement (1) selon la revendication précitée 4, **caractérisé en ce que** les premières faces d'appui (15) des au moins deux éléments d'encliquetage (7, 8, 9, 10) se trouvent dans un plan commun perpendiculaire à la surface de recouvrement (5) avec des faces décalées (16) situées à des distances différentes.

10. Meuble avec un dispositif de recouvrement (1) selon la revendication précitée 3, **caractérisé en ce que** la première surface de recouvrement (5) présente un contour rectangulaire.

11. Meuble avec un dispositif de recouvrement (1) selon la revendication 6, **caractérisé en ce que** plusieurs des éléments d'encliquetage (7, 8, 9, 10) sont disposés sur une section de contour droite (3a, 3b) commune de la surface de recouvrement (5), au moins deux des éléments d'encliquetage (7, 8, 9, 10) se différenciant du fait que leurs arêtes décalées sont disposées sur la même section de contour (3a, 3b) à des distances différentes de la surface de recouvrement (5).

12. Meuble avec un dispositif de recouvrement (1) selon la revendication précitée 3, **caractérisé en ce que** la saillie (14) d'un des éléments d'encliquetage (7, 8, 9, 10) est fixée sur une section mobile libre d'une barre (13) flexible élastiquement, laquelle barre étant reliée de façon fixe au corps de base à deux extrémités opposées par une colonne de support (12) saillant de la surface de recouvrement (5).

13. Meuble avec un dispositif de recouvrement (1) selon la revendication précitée 12, **caractérisé en ce que** la barre (13) a une forme cintrée.
